# EUROPÄISCHE PATENTSCHRIFT

(11) **EP 0 684 115 B1**
(45) Veröffentlichungstag und Bekanntmachung des Hinweises auf die Patenterteilung: **13.01.1999**
(21) Anmeldenummer: 95107420.2
(22) Anmeldetag: 16.05.1995
(51) Int. Cl.: B29B 7/40

(54) **Verfahren zur Herstellung eines füllstoffhaltigen Reaktionsgemisches**
Method for making a reactive mixture containing filling material
Procédé pour la fabrication d'un mélange réactif contenant de la matière de remplissage

(30) Priorität: 27.05.1994 DE 4418505
(43) Veröffentlichungstag der Anmeldung: 29.11.1995
(73) Patentinhaber: BAYER AG, 51368 Leverkusen (DE)
(72) Erfinder: Schulte, Klaus, Dipl.-Ing., D-51427 Bergisch Gladbach (DE); Ersfeld, Heinrich, D-51381 Leverkusen (DE); Kreuer, Karl Dieter, D-51371 Leverkusen (DE); Wolfrum, Christian, Dr., D-51061 Köln (DE)

(56) Entgegenhaltungen:
- FR-A- 2 263 255
- FR-A- 2 674 181
- GB-A- 838 030
- US-A- 3 843 100
- US-A- 3 920 223

## Beschreibung

Die vorliegende Erfindung betrifft ein Verfahren und eine Vorrichtung zur Herstellung eines füllstoffhaltigen Reaktionsgemisches, wobei zunächst die Reaktivkomponenten des Reaktionsgemisches miteinander vermischt werden und anschließend der Füllstoff in trockener Form, d.h. in nicht vordispergierter Form, in das Reaktionsgemisch eingemischt wird.

Das Einbringen von trockenen Füllstoffen in aushärtbare Polymere ist aufgrund des hohen Gasgehaltes von trockenen Füllstoffen, des Staubens, der Neigung zur Bildung von Agglomeraten und Schwierigkeiten bei der Benetzung grundsätzlich problematisch. Häufig wird daher der Weg beschritten, die Füllstoffe zunächst mit einer geringen Menge einer mit dem Polymer verträglichen Flüssigkeit bzw. einer kleiner Menge des Polymers vorzuvermischen, um beim eigentlichen Herstellen der vulkanisierbaren Mischung Probleme der Benetzung und des Staubens sowie hoher Gaseinschlüsse auszuschalten. Im Falle von Reaktivmischungen bietet sich dabei an, den Füllstoff zunächst mit einer Reaktionskomponente der Reaktivmischung vorzuvermischen. Jedoch wird durch eine solche Vorgehensweise der Verbund aus Füllstoff und ausgehärteter Reaktionsmischung negativ beeinflußt, da die Vermischung der auf der Füllstoffoberfläche aufgebrachten einen Reaktionskomponente mit der zweiten Reaktionskomponente lediglich durch Diffusion erfolgen kann, so daß im Rahmen der Reaktionszeiten gegebenenfalls in der Nähe der Füllstoffoberfläche keine aushärtbare Mischung erzeugt werden kann.

Gemäß älteren Vorschlägen (Kunststoffhandbuch, Bd. VII, 1966, S. 157; US-A 4 275 033) werden daher die Reaktivkomponenten mit dem Füllstoff simultan in Rührwerksmischkammern vermischt. Ein derartiges Verfahren ist jedoch nur für relativ langsam oder bei nach der Vermischung erhöhter Temperatur aushärtenden Reaktivmischungen geeignet, da relativ lange Mischzeiten erforderlich sind.

Gemäß EP-A 411 598 wird vorgeschlagen, die Reaktivkomponenten zunächst in einer Rührwerksmischkammer zu vermischen und den Füllstoff unterhalb des Rührwerks in die Mischkammer einzuführen. Dieses Verfahren ist lediglich für sehr leicht benetzbare Füllstoffe wie Kork geeignet. Ferner muß auch hier die Reaktivmischung bei der in der Mischkammer herrschenden Temperatur relativ lange Reaktionszeiten aufweisen.

Aus der US-A-3 843 100 ist ferner ein Verfahren bekannt, bei dem die in einem Rührwerksmischer vorvermischten Reaktivkomponenten in einem nachgeschalteten Rührarmmischer mit dem Füllstoff vermischt werden, wobei in dem Rührarmmischer zur Druckerhöhung zusätzlich eine Schnecke vorgesehen ist.

Das gemeinsame Problem beim Einsatz von Rührwerken zur Vermischung von Füllstoffen und Reaktivkomponenten ist, daß immer eine gewisse Aushärtung innerhalb des Rührwerks erfolgt, so daß aufwendige Reinigungsprozeduren unter Einsatz von Lösungsmitteln erforderlich sind.

Hochwirksame selbstreinigende Mischaggregate für die Reaktivkomponenten wie Hochdruck-Injektionsmischer und hochtourig laufende Friktionsmischer sind für die Vermischung mit Füllstoffen nicht geeignet, da einerseits füllstoffhaltige Reaktivmischungen zu hohe Viskositäten aufweisen und andererseits die Abrasivität der Füllstoffe zur Zerstörung des Mischaggregates führen.

Es wurde nun gefunden, daß selbstreinigende Friktionsmischer für die Vermischung vorvermischter Reaktivkomponenten mit Füllstoff hervorragend geeignet sind, wenn diese unterbelastet bei niedriger Drehzahl betrieben werden.

Gegenstand der vorliegenden Erfindung ist daher ein Verfahren zur Herstellung eines füllstoffhaltigen, aushärtbaren Mehrkomponenten-Reaktionsgemisches gemäß Anspruch 1.

Das erfindungsgemäße Verfahren ist insbesondere geeignet für die Herstellung von füllstoffhaltigen Polyurethanen, wobei als Reaktivkomponenten Isocyanate und Isocyanat-reaktive Wasserstoffatome aufweisende Verbindungen eingesetzt werden.

Gebräuchliche Füllstoffe, die erfindungsgemäß geeignet sind, sind beispielsweise Zement, Kalk, Kreide, Bariumsulfatfasern, Glasfasern, insbesondere gemahlene Glasfasern oder auch silikatische Mineralien. Ferner können Recyclingprodukte aus Kunststoff, insbesondere Polyurethan wie Schaumstoffpulver, das aus zerkleinerten Schaumstoffabfällen hergestellt worden ist, oder zerkleinerte Abfälle aus thermoplastischen Kunststoffen oder auch zerkleinerte Abfälle aus z.B. Kabelschrott, eingesetzt werden.

Das erfindungsgemäße Verfahren ist insbesondere geeignet für Mengenverhältnisse Reaktivmischung : Füllstoff von bis zu 100 : 300 Volumen/Volumen. Besonders bevorzugt wird das Verfahren eingesetzt, wenn Volumenverhältnisse Reaktivmischung : Füllstoff im Bereich oberhalb 100 : 50, insbesondere zwischen 100 : 100 bis 100 : 300, eingesetzt werden sollen.

Die erfindungsgemäß einsetzbaren Friktionsmischer weisen eine Schnecke, die konisch ausgebildet ist, in einem konischen Mischraum auf, wobei quer zur Achse der Schnecke auf der einen Seite das Reaktionsgemisch und auf der anderen Seite der Füllstoff in den Zwischenraum zwischen Schnecke und Mischraum eingeführt wird. Der Auslaß des Mischraums befindet sich in Förderrichtung unterhalb des Endes mit geringerem Durchmesser der konischen Schnecke. Erfindungsgemäß soll der Spalt zwischen konischer Schnecke und Mischraumwand größer als die Füllstoffteilchen sein.

Zum Zwecke der Reinigung der Mischkammer ist die Schnecke im Mischraum in axialer Richtung verschiebbar angeordnet, so daß z.B. nach Schußende, d.h. nach Befüllen einer Form mit dem füllstoffhaltigen Reaktionsgemisch, Wandgängigkeit zwischen Schnecke und Mischkammerwandung hergestellt werden kann. Zur Gewährleistung der Wandgängigkeit weisen Schneckenkonus und Mischkammerkonus denselben Konuswinkel auf. Prinzipiell geeignete Friktionsmischer sind in den DE-A 20 62 008, DE-A 22 29 649, DE-A 37 30 782 und EP-A 340 436 offenbart.

Die Mischung mittels Friktionsmischern erfolgt derart, daß das zu mischende Material, das sich innerhalb des Schneckenganges befindet, schneller gefördert wird als Material, das an der Mischkammerwand im Spalt haftet. Solche Friktionsmischer zeichnen sich (im Vergleich zu Förderschnecken) durch ein kleines Verhältnis von Gangvolumen und Spaltvolumen von etwa 1:1 bis 5:1 aus. Dabei wird unter Gangvolumen das freie Volumen des Mischers verstanden, wenn die Schnecke durch axiale Verschiebung in Kontakt mit der Mischkammerwand gebracht ist. Das Spaltvolumen ist das Produkt aus Breite des Friktionsspaltes und Oberfläche der Mischkammerwand. Die Summe aus Gangvolumen und Spaltvolumen ist als das freie Volumen des Mischers während des Mischens, d.h. bei eingestelltem Friktionsspalt.

Erfindungsgemäß bevorzugt ist die Schnecke über ihre ganze Länge konusförmig ausgebildet im Gegensatz zu den früheren Vorschlägen, nach denen jeweils im Bereich des größeren Schneckendurchmessers ein zylindrischer Teil vorgesehen ist.

Erfindungsgemäß wird der Friktionsmischer zur Vermischung von Reaktionsgemisch mit Füllstoffen bei Umdrehungsgeschwindigkeiten betrieben, die erheblich unterhalb den Umdrehungsgeschwindigkeiten liegen, die bei Einsatz von Friktionsmischern zur Vermischung der Reaktivkomponenten eingesetzt werden (12 000 bis 20 000 U/min). Erfindungsgemäß liegt die Umdrehungsgeschwindigkeit des Konus bei 500 bis 5 000 U/min, bevorzugt unterhalb 3 000 U/min.

Erfindungsgemäß wird der Friktionsmischer unterhalb seiner Förderkapazität betrieben. Die maximale Förderkapazität des Friktionsmischers bei gegebener Umdrehungszahl der Schnecke ist dadurch bestimmt, daß der Zwischenraum zwischen Schnecke und Mischkammerwand bis zur Höhe der Zufuhröffnungen der Komponenten gefüllt ist. Bei Überschreiten der maximalen Förderkapazität erfolgt ein Rückstau der Mischungskomponenten in den rückwärtigen Bereich der Schnecke. Bei Beschickung des Friktionsmischers unterhalb der Förderkapazität ist (unterlastig) der Zwischenraum zwischen Schnecke und Mischkammerwand erst ab einer Stelle (in Strömungsrichtung) unterhalb der Einlaßöffnungen für Reaktionsmischung und Füllstoff vollständig gefüllt. Vorzugsweise wird der Friktionsmischer bei 5 bis 30 % der maximalen Förderkapazität betrieben.

Der Konuswinkel der Schnecke liegt vorzugsweise zwischen 5 und 15° (Winkel zwischen Konusachse und Konusmantellinie). Vorzugsweise kann ferner vorgesehen sein, daß die Steigung der Schnecke in Förderrichtung zunimmt, so daß die Fördergeschwindigkeit entsprechend dem sich verengenden freien Querschnitt erhöht wird.

Die Vorvermischung der Reaktionskomponenten erfolgt vorzugsweise in einem hochwirksamen Hochdruck-Injektionsmischer, bei dem die Reaktivkomponenten unter hohem Druck von gegenüberliegenden Seiten in eine Mischkammer injiziert werden (siehe Kunststoffhandbuch, Bd. VII, 1993, S. 177 ff).

Der Füllstoff kann aus einem Vorratsbehälter über eine Dosierschnecke direkt in den Friktionsmischer gefördert werden.

Es wurde gefunden, daß bei dem erfindungsgemäßen Betrieb des Friktionsmischers bei niedrigen Drehzahlen trotz hoher Abrasivität der Füllstoffe keine Verschleißerscheinungen an Schnecke und Mischkammerwand auftreten. Bei den erfindungsgemäß niedrigen Drehzahlen findet naturgemäß die Selbstreinigung nicht statt. Zur Reinigung des Friktionsmischers wird daher die Wandgängigkeit zwischen Schnecke und Mischkammerwand durch axiale Verschiebung der Schnecke hergestellt und die Drehzahl in dem Bereich selbstreinigender Drehzahlbereiche erhöht, d.h. auf 12 000 U/min und höher, wobei die Zufuhr von Reaktionsgemisch und Füllstoffen während des Reinigungsvorganges natürlich unterbrochen wird.

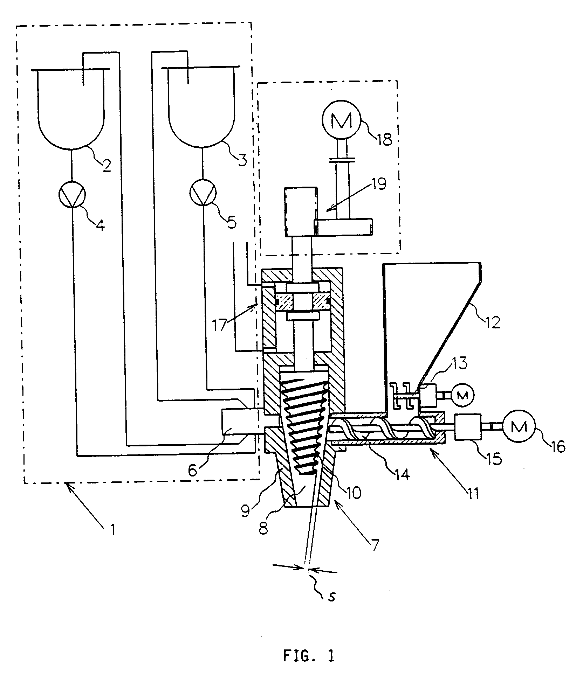

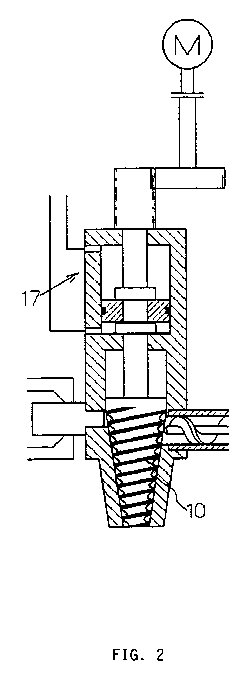

Die Erfindung wird nachfolgend anhand der beigefügten Figuren 1 und 2 näher erläutert.

Die Vorvermischung 1 des Reaktionsgemisches erfolgt, indem die flüssigen Reaktionskomponenten aus Vorratsbehältern 2, 3 mittels Dosierpumpen 4, 5 dem Hochdruck-Injektionsmischkopf 6 zugeführt werden. Aus dem Mischkopf 6 wird die vorgemischte Reaktionsmischung direkt in den Friktionsmischer 7 gefördert. Der Friktionsmischer 7 besteht aus dem konischen Gehäuse 9 und der in der Achse 8 des konischen Gehäuses 9 angeordneten konischen Schnecke 10. Die Schnecke 10 wird mittels Antriebsmotor 18 und Übersetzungsgetriebe 19 in Rotation um die Achse 8 versetzt. Die Füllstoffdosiereinheit 11 besteht aus einem Vorlagetrichter 12 mit Auflockerungsrührwerk 13 und der mittels Antriebsmotor 16 und Getriebe 15 angetriebenen Füllstoffdosierschnecke 14, die direkt in den Friktionsmischer dosiert. Mittels der hydraulischen Hubeinrichtung 17 kann die Schnecke 10 längs der Achse 8 verschoben werden. Der Spalt s zwischen der Schnecke 10 und der Mischkammerwand 9 wird durch axiale Verschiebung der Schnecke 10 so gewählt, daß dieser größer ist als die Füllstoffteilchen.

Nach beendetem Schuß wird die Schnecke 10 in Richtung der Achse 8 derart abgesenkt, daß Wandgängigkeit hergestellt ist und danach die Drehzahl der Schnecke 10 auf die Reinigungsdrehzahl erhöht. Der Friktionsmischer in Reinigungsstellung ist in Fig. 2 dargestellt.

## Patentansprüche

1. Verfahren zur Herstellung eines füllstoffhaltigen, aushärtbaren Mehrkomponenten-Reaktionsgemisches durch
a) Einleiten und Vorvermischen der Reaktionskomponenten in einem Hochdruck-Injektionsmischer,
b) Vermischen der vorvermischten Reaktionskomponenten mit den Füllstoffen in einem Friktionsmischer bei Umdrehungszahlen von 500 bis 5.000 U/min, wobei der Friktionsmischer eine konisch ausgebildeten Schnecke in einem konischen Mischraum aufweist, wobei ein Spalt zwischen Schnecke und Mischraumwand vorgesehen ist, der größer ist als die Füllstoffteilchen, und wobei das Verhältnis von Spaltvolumen zu Gangvolumen 1:1 bis 1:5 beträgt, und
c) Erhöhung der Drehzahl der Schnecke und axiale Verschiebung der Schnecke zur Herstellung der Wandgängigkeit nach Beendigung der Einleitung von Reaktionsgemisch und Füllstoffen.

2. Verfahren nach Anspruch 1, dadurch gekennzeichnet, daß der Friktionsmischer unterlastig betrieben wird.

## Claims

1. Process for the production of a curable, multi-component reaction mixture containing filler by
a) introducing and premixing the reaction components in a high pressure injection mixer,
b) mixing the premixed reaction components with the fillers in a friction mixer at rotational speeds of 500 to 5000 rpm, wherein the friction mixer has a conically shaped screw in a conical mixing chamber, wherein a gap is provided between the screw and the wall of the mixing chamber, which gap is larger than the filler particles, and wherein the ratio of gap volume to channel volume is 1:1 to 1:5 and
c) increasing the rotational speed of the screw and axial displacement of the screw to ensure wall contact once introduction of the reaction mixture and fillers is complete.

2. Process according to claim 1, characterised in that the friction mixture is operated under a fractional load.

## Revendications

1. Procédé pour la préparation d'un mélange réactionnel multiconstituant durcissable contenant une charge par
a) introduction et prémélange des constituants réactionnels dans un mélangeur à injection à pression élevée,
b) mélange des constituants réactionnels prémélangés avec les charges dans un mélangeur à friction à des nombres de tours de 500 à 5 000 tr/min, le mélangeur à friction présentant une vis de forme conique dans un espace de mélange conique, un interstice entre la vis et la paroi de l'espace de mélange étant prévu, lequel est supérieur aux particules de charge, le rapport du volume de l'interstice au volume du pas étant compris entre 1:1 et 1:5, et
c) élévation du nombre de tours de la vis et déplacement axial de la vis pour la préparation de l'accès jusqu'à la paroi à la fin de l'introduction du mélange réactionnel et des charges.

2. Procédé selon la revendication 1, caractérisé en ce que le mélangeur à friction fonctionne en sous-charge.
